Europäisches Patentamt

European Patent Office

Office européen des brevets

(11) Publication number: **0 123 848**
**B1**

# EUROPEAN PATENT SPECIFICATION

(45) Date of publication of patent specification: 21.12.88

(21) Application number: **84102858.2**

(22) Date of filing: **15.03.84**

(51) Int. Cl.⁴: **G 11 B 17/02,** G 11 B 19/10

(54) Apparatus for loading a flexible recording disk inposition in a storage file for data transfer.

(30) Priority: **29.03.83 JP 53416/83**

(43) Date of publication of application:
**07.11.84 Bulletin 84/45**

(45) Publication of the grant of the patent:
**21.12.88 Bulletin 88/51**

(84) Designated Contracting States:
**DE GB**

(56) References cited:
**GB-A-2 099 203**
**US-A-3 488 059**
**US-A-3 931 644**
**US-A-4 125 883**

**Patent Abstracts of Japan vol. 7, no. 234, 18
Octobre 1983**

**Patent Abstracts of Japan vol. 7, no. 212, 20
September 1983**

(73) Proprietor: **TEAC CORPORATION**
**3-7-3, Naka-cho**
**Musashino-shi Tokyo (JP)**

(72) Inventor: **Shoji, Makoto**
**Fussa-danchi 7-503 2-16, Minamidenen
Fussa-shi Tokyo (JP)**
Inventor: **Sakai, Yoshiaki**
**2-11-59, Hachimancho
Higashikurume-shi Tokyo (JP)**

(74) Representative: **Wey, Hans-Heinrich, Dipl.-Ing.
et al
Patentanwälte Wey & Partner
Widenmayerstrasse 49
D-8000 München 22 (DE)**

Courier Press, Leamington Spa, England.

**Description**

BACKGROUND OF THE INVENTION

This invention relatês to a storage file for data transfer with a disk cartridge of the kind defined by the precharacterizing features of the claim.

A storage file of this kind for example is known from the GB-A-2 099 203. Similar to other conventional storage files separate sensors besides the sensors already incorporated are needed to detect the disk loading and the disk withdrawal. Besides the need of additional sensors for detecting these operational steps the "motor on" period cannot be determined in a definite and economical manner by the known storage file.

It is therefore the object of the invention to provide a disk cartridge of the kind given by the precharacterizing feature of the claim which is adapted to be operated more economically than the disk cartridge according to the prior art.

This object is solved by the characterizing features of the claim.

SUMMARY OF THE INVENTION

Two conventional sensors, namely the cutout sensor and the index sensor, are used for the purposes of the invention, yielding to the following advantages:

- First, the source of the internal motor control signal D utilizes the output from the cutout sensor for sensing the insertion of the disk cartridge into the storage file, even though the cutout sensor is intended for sensing whether the prerecorded data on the inserted disk are protected against erasure or not. No additional sensor is therefore required which is devoted exclusively for detecting the disk loading.

- Second, the stop circuit utilizes the output from the index sensor for sensing the withdrawal of the disk from the storage file. Here again, therefore, no exclusive sensor is required for sensing the disk withdrawal in addition to the index sensor, which has conventionally been used for measuring the rotational speed of the disk.

- Third, the internal motor control signal source responds to the output of the "ready" circuit, which also is standard in the disk drive art, for suspending the rotation of the drive hub when the rotational speed of the disk builds to the predetermined degree. The "motor on" period dictated by the internal motor control signal thus can be determined definitely and economically.

Last but not least the "ready" signal is generated upon completion of the clamping of the disk. For this reason too the period of the initial rotation of the drive hub can be optimally reduced to a minimum.

BRIEF DESCRIPTION OF THE DRAWINGS

Fig. 1 is a plan view of a flexible magnetic disk cartridge for use within a storage file;

Fig. 2 is a schematic vertical section through an example of a disk storage file, shown with its centering cone out of engagement with the drive hub;

Fig. 3 is a slightly enlarged, partial vertical section through the disk storage file of Fig. 2, showing the centering cone engaged with the drive hub to clamp the flexible magnetic disk therebetween;

Fig. 4 is a block diagram of the electronic drive control system adapted to be controlled according to the invention and incorporated in the disk storage file of Fig. 2 for controlling its operation in accordance with our invention;

FIG. 5 is a diagram of examples of waveforms appearing in various parts of the FIG. 4 system, which are useful in explaining its operation;

FIG. 6 is a diagram of different examples of waveforms appearing in the various parts of the FIG. 4 system, which also are useful in explaining its operation in another aspect thereof; and

FIG. 7 is a schematic electrical diagram, partly in block diagrammatic form, showing the stop circuit of the FIG. 4 system in detail.

DETAILED DESCRIPTION OF THE INVENTION
Magnetic Disk Cartridge

We have illustrated in FIG, 1 a double sided magnetic disk cartridge 10 suitable for use with our inventicn. The disk cartridge has a flexible magnetic disk 12 housed in a square envelope or jacket 14. The disk 12 has formed therein a central aperture 16 and a smaller, eccentric index hole 18. The envelope 14 has central apertures 20 formed in both sides thereof. The envelope apertures 20 are larger than the concentric disk aperture 16, thus exposing an annular portion 22 of the disk around the disk aperture. Further the evelope 14 has aligned radial slots 24 and aligned holes 26 formed in both sides thereof. The radial slots 24 are intended to allow direct head accessing to the opposite surfaces of the disk 12 for data transfer. The holes 26 are adapted to align with the disk index hole 18 as the disk rotates within the envelope 14.

In addition the envelope 14 has a cutout 28 in a marginal edge thereof. As is well known, the marginal cutout 28 is intended for the protection of important recorded matter; if the disk already bears information that is not to be erased, the cutout 28 is to be shielded against the passage of light to prevent some different information from being inadvertently recorded on the disk.

Disk Storage File

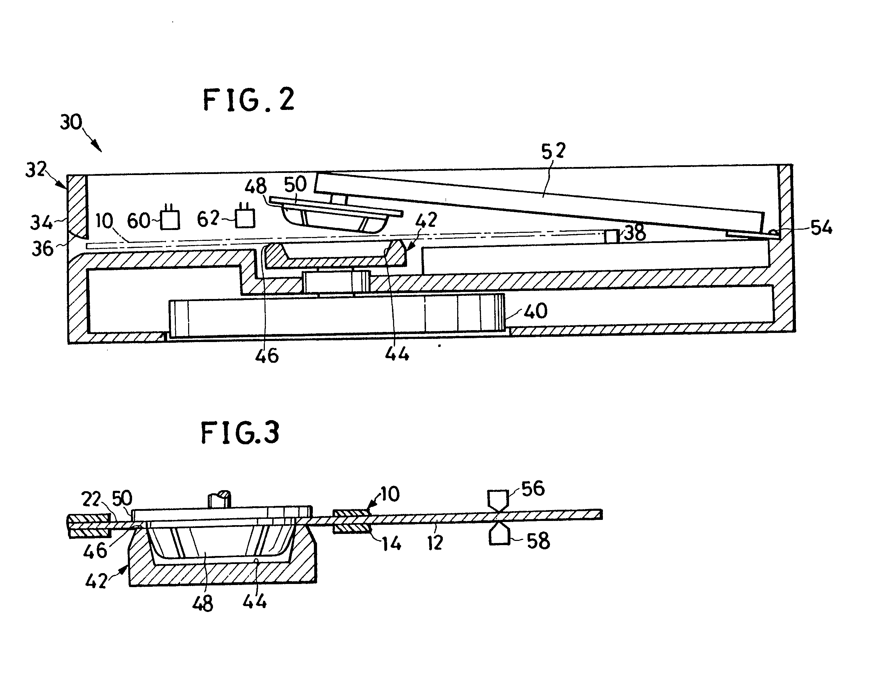

Reference is directed to FIGS. 2 and 3 for the mechanical configuration of the apparatus for use with the disk cartridge 10. We have shown the apparatus insofar as we consider necessary for a full understanding of the present invention.

Generally designated 30, the illustrated disk storage file has a housing 32 having a front panel 34. Formed in this front panel is an entrance slot 36 through which the disk cartridge 10 is to be inserted horizontally into, and withdrawn from, the device. The housing 32 has a stop 38 firmly mounted therein for stopping the inserted disk cartridge 10 in its working position depicted by the phantom outline in FIG. 2.

Provided within the file housing 32 is a disk drive motor 40 coupled directly to a rotary drive hub 42. This drive hub has a central depression or socket 44, leaving an annular rim 46 for direct contact with the exposed annular portion 22 of the flexible magnetic disk 12. Over the drive hub 42 there is provided a centering cone 48, complete with a flange 50, rotatably mounted to the distal end of a cantilevered support arm 52 which is proximally pivoted at 54 to the file housing 32. With the pivotal motion of the support arm 52 the centering cone 48 is movable into and out of engagement in the depression 44 in the drive hub 42 through the central aperture 16 in the magnetic disk 12. The drive hub depression 44 is approximately equal in diameter to the disk aperture 16.

Thus, if the magnetic disk 12 is placed in more or less correct alignment with the drive hub 42, the centering cone 48 on its downward or counterclockwise movement will pass the disk aperture 16 and be seated in the drive hub depression 44 even if the drive hub is held stationary as in the prior art. The magnetic disk 12 will then have its exposed annular portion 22 engaged between centering cone flange 50 and drive hub rim 46 as shown in FIG. 3. However, should the magnetic disk 12 be placed too much out of alignment with the drive hub 42, the centering cone 48 might force the inner edge portion of the disk into the drive hub depression 44 if the drive hub were held stationary. Our invention eliminates this possibility.

At 56 and 58 in FIG. 3 are shown a pair of transducer heads arranged for data transfer contact with the opposite surfaces of the clamped magnetic disk 12 through the radial slots 24 in the disk envelope 14. The transducer heads 56 and 58 are of course movable radially of the magnetic disk 12 in predetermined relation with its rotation.

Reference may be had to the aforementioned U.S. patent application Ser. No. 434,400 for further details in the mechanical construction of the exemplified disk storage file 30.

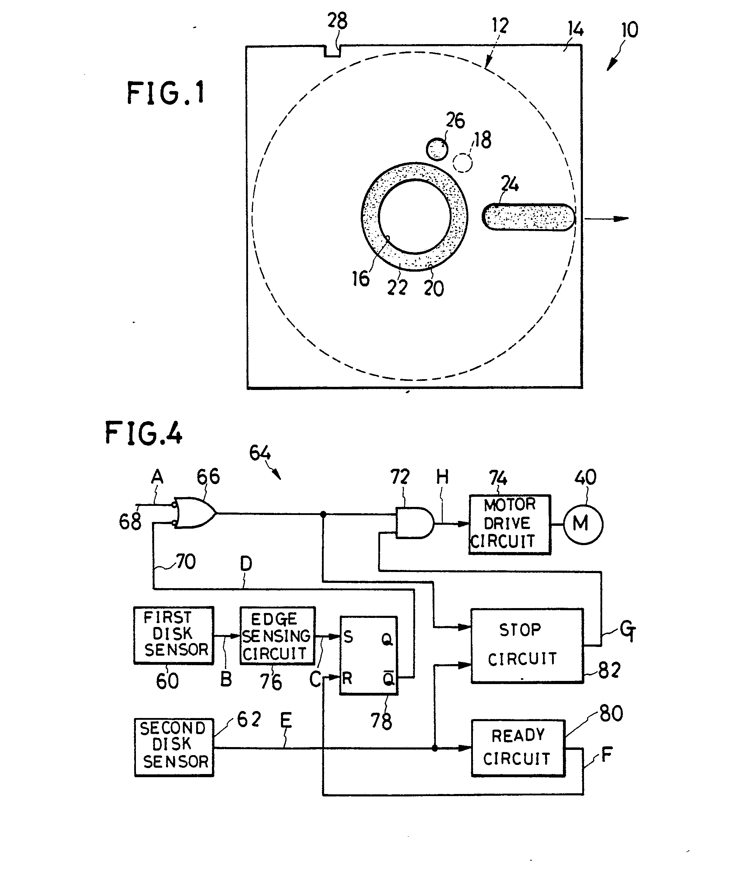

FIG. 2 further indicates first 60 and second 62 disk sensors forming parts of the drive control system in accordance with our invention. Disposed on the path of the top edge, as seen in FIG. 1, of the disk cartridge 10 within the file housing 32, the first disk sensor 60 detects the cutout 28 in the disk envelope 14 upon full insertion of the disk cartridge into the file housing. The second disk sensor 62 is arranged to sense the passage of the index hole 18 in the magnetic disk 12 through the aligned holes 26 in the disk envelope 26. Although FIG. 2 shows both first 60 and second 62 disk sensors highly diagrammatically, it will be understood that each of them takes the form of a photocoupler, known per se, comprising a source of radiation and a photosensor, the latter being irradiated in a controlled manner by the radiation emitted by the former.

Drive Control System

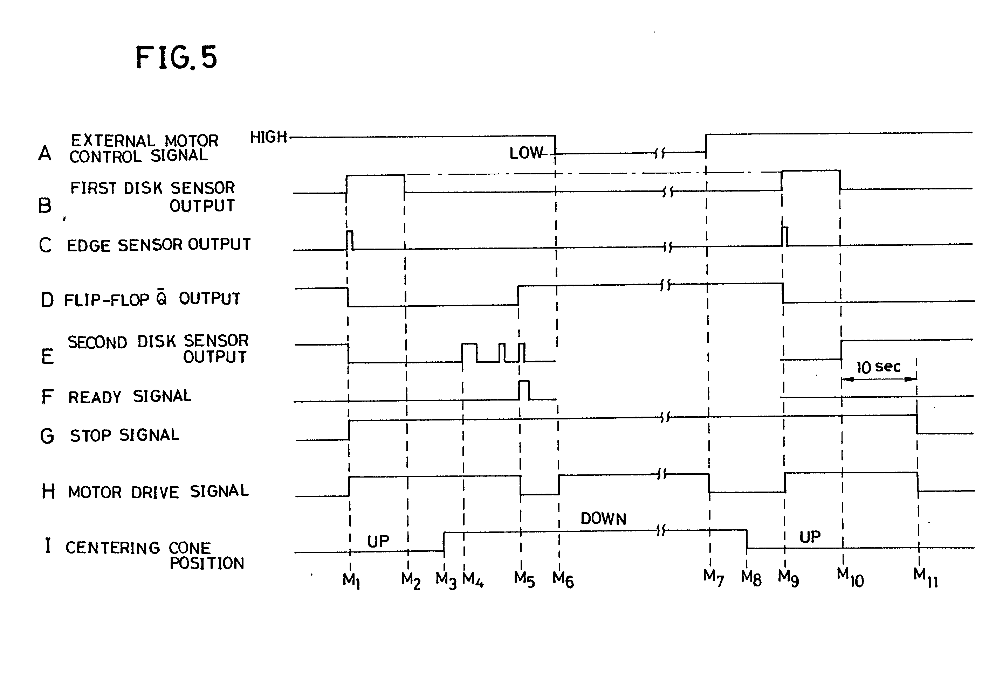

We will now discuss the drive control system 64 of FIG. 4 in relation to the waveform diagram of FIG. 5. The latter figure represents at A through H the signal waveforms appearing in the various parts of the drive control system 64. Thus in FIG. 4 we have indicated by the letters A through H the lines on which the corresponding signal waveforms of FIG. 5 appear.

The drive control system 64 includes an OR type NAND gate 66 having a first input connected to an external disk control circuit, not shown, via a line 68 to receive therefrom a motor control signal indicated at A in FIG. 5. The NAND gate 66 has a second input connected to a line 70 to receive an internally generated motor control signal D. The output of the NAND gate 66 is connected to an AND gate 72 and thence to a motor drive circuit 74 which is coupled to the disk drive motor 40 for the on off control of its operation. The output from the AND gate 72 constitutes a motor drive signal H causing the motor drive circuit 74 to set the disk drive motor 40 into and out of rotation in accordance with the novel concepts of our invention.

As has been stated, the first disk sensor 60 senses the presence or absence of the cutout 28 in the disk envelope 14 when the disk cartridge 10 is inserted in the entrance slot 36 of the storage file 30 as indicated by the arrow in FIG. 1. Since the cutout 28 is assumed to be covered with light shielding material if the magnetic disk 12 already bears information that is not to be erased by recording, the output B from the first disk sensor 60 remains high upon full insertion of the disk cartridge 10, as indicated by the dot and dash line in FIG. 5. In the presence of the cutout 28, on the other hand, the output B from the first disk sensor 60 goes low upon full insertion of the disk cartridge 10 to allow information to be recorded on the magnetic disk 12.

We use the first disk sensor 60 not only for cutout detection but also for sensing the loading and unloading of the disk cartridge 10 into and out of the storage file 30. The upper marginal edge portion, as seen in FIG. 1, of the disk envelope 14 shields the radiation during the insertion of the disk cartridge 10 in the storage file 30, causing the first disk sensor 60 to produce a high output as from moment M1 to moment M2 in FIG. 5. If the disk envelope 14 has the cutout 28, the output from the first disk sensor 60 goes low at the moment M2 when the loading of the disk cartridge 10 is completed. The first disk sensor output also goes high during the unloading of the disk cartridge 10, as from moment M9 to moment M10 in FIG. 5, as the disk envelope 14 shuts off the radiation. If the disk cartridge 10 has its cutout 28 covered with light shielding material, on the other hand, then the first disk sensor output remains high throughout the period, from moment M1 to moment M10, during which the disk cartridge 10 is loaded in the storage file 30.

Connected to the output of the first disk sensor 60 is an edge sensing circuit 76 which puts out a pulse at each moment the incoming first disk sensor output goes high. The output pulses from the edge sensing circuit 76 are given at C in FIG. 5. It will be seen that the edge sensing circuit 76 functions to sense the moment MI when the loading of the disk cartridge 10 is initiated, and the moment M9 when the unloading of the disk cartridge is commenced.

At 78 is shown an RS flip flop for providing the internal motor control signal D for application to the NAND gate 66. The flip flop 78 has a set input S connected to the edge sensing circuit 76, a reset input R connected to a READY circuit 80, and a $\overline{Q}$ output connected to the line 70 leading to the NAND gate 66. Thus the $\overline{Q}$ output from the flip flop 78 goes low when it is set by each output pulse of the edge sensing circuit 76, and goes high when it is reset by the READY pulse from the READY circuit 80 shown at F in FIG. 5. We will refer to the READY circuit 80 later in connection with the second disk sensor 62.

The second disk sensor 62 produces pulses, as depicted at E in FIG. 5, as the index hole 18 in the magnetic disk 12 aligns with the holes 26 in the disk envelope 14 with the rotation of the disk relative to the envelope. The pulses are utilized for sensing the speed of rotation of the magnetic disk from their spacings and for sensing the relative positions of the disk and the transducer heads from their positions. The light emitted by the light source of the second disk sensor 62 impinges on its photosensor not only when the disk index hole 18 aligns with the envelope holes 26 but also upon withdrawal of the disk cartridge 10 from the storage file 30. Thus the output from the second disk sensor 62, going high at the moment M10 in FIG. 5, serves the additional purpose of indicating the withdrawal of the disk cartridge 10 from the storage file 30.

The output of the second disk sensor 62 is connected to the READY circuit 80. This circuit 80 puts out the READY pulse upon receipt of at least two index pulses following the moment when the rotative speed of the magnetic disk 10 becomes 50 per cent or more of the predetermined normal speed. If the index pulse distances during normal disk rotation are 200 milliseconds, the READY circuit 80 responds to at least two index pulses following the moment when the index pulse distances become not more than 300 milliseconds. The rotative speed of the magnetic disk 12 becomes approximately normal upon production of two index pulses after the speed has become more than 50 percent of the normal value. The READY pulse put out by the READY circuit 80 at the moment M5 in FIG. 5 is impressed to the flip flop 78 for resetting the same.

Further included in the drive control system 64 is a STOP circuit 82 which puts out a STOP signal given at G in FIG. 5. It will be noted that the STOP signal goes low at the moment M11 after the output E from the second disk sensor 62 has remained high for a preassigned length of time, which is 10 seconds in this particular embodiment.

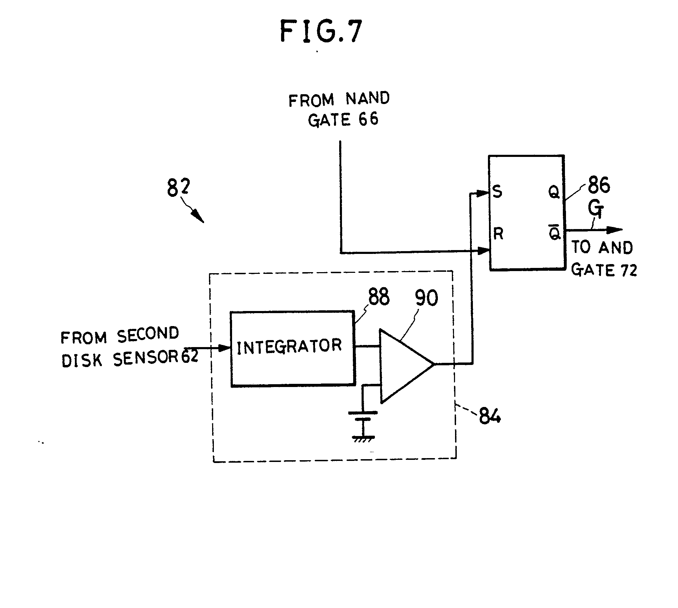

FIG. 7 is a more detailed representation of the STOP circuit 82. It comprises a timer 84 and an RS flip flop 86. The timer 84 comprises an integrator 88 for integrating the high output from the second disk sensor 62, and a voltage comparator 90 responsive to the integrator output for putting out a pulse when the second disk sensor output remains high for 10 seconds. This output pulse of the comparator 90 is impressed to the set input S of the flip flop 86, causing its $\overline{Q}$ output (STOP signal) to go low at the moment M11. This STOP signal is applied to the AND gate 72 for causing the motor drive circuit 74 to set the disk drive motor 40 out of rotation at the moment M11. The flip flop 86 has its reset input R connected to the NAND gate 66, FIG. 4, so that the flip flop is reset when the NAND gate output goes high.

Operation

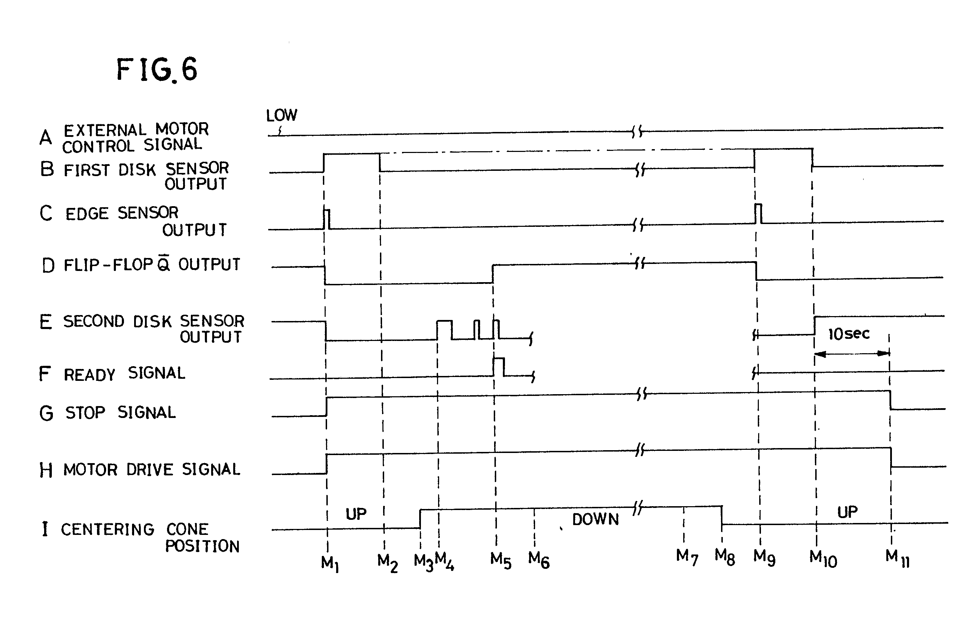

We will describe the operation of the disk storage file 30 with its motor control circuit 64 on the assumption of two different cases. One is that the external motor control signal is held low only during the period when the magnetic disk 12 is to be held in rotation for data transfer, as indicated at A in FIG. 5. The other case is that the external motor control signal is constantly held low as at A in FIG. 6.

In the first case, as the operator starts inserting the disk cartridge 10 into the entrance slot 36 of the storage file 30, the output from the first disk sensor 60 goes high at the moment M1, as at B in FIG. 5, since the disk cartridge blocks the radiation that has been impinging on its photosensor. The edge sensing circuit 76 responds to this high output from the first disk sensor 60, producing a pulse at the moment M1 as at C in FIG. 5. Impressed to the set input S of the flip flop 78, the output pulse from the edge sensing circuit 76 sets the flip flop as at D in FIG. 5. The corresponding $\overline{Q}$ output from the flip flop 78 is applied as the internal motor control signal to one input of the NAND gate 66. The external motor control signal being applied to the other input of the NAND gate 66 is now assumed to be high, so that the output from the NAND gate resets the flip flop 86, FIG. 7, included in the STOP circuit 82. Consequently the output G from the STOP circuit 82 goes high, causing the AND gate 72 to pass the high output from the NAND gate 24. The resulting high motor drive signal H from the AND gate 72 causes the motor drive circuit 74 to set the disk drive motor 40 into rotation at the moment M1. It is thus seen that the drive control system 64 initiates the rotation of the disk drive motor 40 immediately upon insertion of the disk cartridge 10 into the storage file 30. It is of course understood that the centering cone 48 is now out of engagement with the drive hub 42, as indicated at I in FIG. 5.

The insertion of the disk cartridge 10 is completed at the moment M2. Thereupon. as will be noted from B in FIG. 5, the output from the first disk sensor 60 will go low if the loaded disk cartridge has the cutout 28 in its envelope 14, and will remain high if the cutout has been covered with light shielding material.

The support arm 52 carrying the rotatable centering cone 48 is pivoted counterclockwise, as viewed in FIG. 2, to move the cone into engagement in the depression 44 in the drive hub 42

through the central aperture 16 in the magnetic disk 12 at the moment M3 immediately following the moment M2 when the loading of the disk cartridge 10 is completed. The magnetic disk 12 is loosely enclosed in the envelope 14 for rotation relative to the same. Accordingly, even if the disk cartridge 10 is fully inserted in the storage file 30 into abutment against the stop 38, the magnetic disk 12 does not necessarily come into alignment with the drive hub 42. The magnetic disk might therefore be engaged eccentrically between drive hub 42 and centering cone 48.

It is to eliminate that possibility that the drive hub 42 is set into rotation immediately upon full insertion of the disk cartridge 10 into the storage file 30. As the descending cone 48 enters the central aperture 16 in the misaligned magnetic disk 12, the latter will rotate with the drive hub 42, with its inner edge in sliding contact with the cone, and so will align itself with the drive hub and, when the cone is fully engaged in the hub depression, with the cone. Thus the clamping of the magnetic disk 12 at the moment M3 when the disk is already in rotation makes it possible to center the disk far more exactly than if the disk is held stationary.

As the rotative speed of the clamped magnetic disk 12 subsequently increases to the predetermined range at the moment M5, the READY circuit 80 puts out the READY pulse as at F in FIG. 5 in response to the output pulses of the second disk sensor 62. The READY pulse resets the flip flop 78 as at D in FIG. 5, with the result that the disk drive motor 40 comes to a temporary stop as the external motor control signal A is still high at the moment M5.

It is at the next moment M6 that the external motor control signal A goes low. Thereupon the disk drive motor 40 recommences rotation for data transfer between magnetic disk 12 and transducer heads 56 and 58 in the write or read mode.

As the external motor control signal A goes high at the moment M7, the motor drive signal H from the AND gate 72 goes low, causing the motor drive circuit 74 to set the disk drive motor 40 out of rotation. Then, at the moment M8, the centering cone 48 is moved out of engagement with the drive hub 42 to release the magnetic disk 12. The operator may start withdrawing the disk cartridge 10 at the subsequent moment M9. If the cartridge 10 has the cutout 28 in its disk envelope 14, and if, consequently, the output from the first disk sensor 60 has been low, it goes high at the moment M9 as at B in FIG. 5. The corresponding output pulse C from the edge sensing circuit 76 sets the flip flop 78 as at D in FIG. 5, with the result that the disk drive motor 40 is again set into rotation as at H in FIG. 5.

Upon complete withdrawal of the disk cartridge 10 from the storage file 30 at the subsequent moment M10, the photosensor of the second disk sensor 62 becomes irradiated by the associated radiation source. Thus the output from the second disk sensor 62 goes high as at E in FIG. 5. This high output is impressed to the timer 84 of the STOP circuit 82. As has been set forth in connection with FIG. 7, the timer 84 determines whether the high input lasts 10 seconds or not. At the moment M11, 10 seconds after the complete withdrawal of the disk cartridge 10 at the moment M10, the output from the timer 84 sets the flip flop 86 included in the STOP circuit 82. The resulting low $\overline{Q}$ output from the flip flop 86 makes the output from the AND gate 72 go low, so that the rotation of the disk drive motor 40 terminates as at H in FIG. 5.

The second disk sensor 62 produces pulses as at the moments M4 and M5 as the index hole 16 in the magnetic disk 12 aligns with the envelope holes 26. These second disk sensor output pulses during disk rotation are of such short durations, however, that the timer 84 of the STOP circuit 82 does not set the flip flop 86. There is accordingly no possibility of the disk drive motor 40 being set out of rotation by the second disk sensor output during data transfer.

We will now proceed to the operational description in the second case; that is, the external motor control signal is constantly held low as at A in FIG. 6.

Before the moment M1 in FIG. 6, when the operator starts loading the disk cartridge 10, the disk drive motor 40 is held out of rotation despite the low state of the external motor control signal A if then the STOP signal is low as at G in FIG. 6. As the output B from the first disk sensor 60 goes high on sensing the loading of the disk cartridge 10 at the moment M1, the disk drive motor 40 starts rotation through the same procedure as in the case of FIG. 5. The magnetic disk 12 of the loaded cartridge 10 is clamped at the moment M3 while the drive hub 42 is in rotation. The disk will be clamped in exact concentric relation with the drive hub 42 and centering cone 48, as has been explained above.

The flip flop 29 is set at the moment M1 by the output from the edge sensing circuit 76 and is reset at the moment M5 by the output from the READY circuit 80, also just as in the case of FIG. 5. In the present case, however, the disk drive motor 40 does not come to a temporary stop but remains in rotation because the external motor control signal A is low.

Upon complete withdrawal of the disk cartridge 10 at the moment M10, the output G from the STOP circuit 82 goes low at the subsequent moment M11, which is 10 seconds after the moment M10. The disk drive motor 10 is thus set out of rotation as at H in FIG. 6 despite sustained low state of the external motor control signal A. The motor will automatically starts rotation upon reloading of the same or another disk cartridge.

The primary advantage of our invention set forth in detail hereinabove is, of course, that the magnetic disk 12 within the envelope 12 can be infallibly caught concentrically between hub 42 and cone 48 in spite of the initial possible displacement of the disk within the envelope. Additional advantages are:

1. The insertion of a disk cartridge automatically sets the disk drive motor into rotation.

2. The above automatic rotation of the disk drive motor is effectuated by utilizing the output from the first disk sensor which detects the data protection cutout in the disk cartridge, thus making possible the provision of a highly simplified system.

3. The disk drive motor comes to a temporary stop after the clamping of the loaded disk cartridge if the external motor control system is then held high, thereby saving power.

4. A saving of power is also realized in the case where the external motor control signal is constantly held low. as the disk drive motor is automatically set out of rotation upon withdrawal of the disk cartridge in response to the output from the second disk sensor which in fact is an index sensor.

Possible Modifications

Although we have shown and described our invention in terms of but one embodiment thereof, we do not wish our invention to be limited to the exact details thereof. A variety of modifications or alterations will occur to one skilled in the electronics art. For example:

1. The timer of the STOP circuit may comprise a digital counter or monostable multivibrator.

2. The disk drive motor may not necessarily be set into rotation immediately upon insertion of the disk cartridge in the storage file but at a later moment before the clamping of the disk. How the start of motor rotation can be delayed will be apparent to the specialists.

**Claim**

1. A storage file (30) for data transfer with a disk cartridge (10) comprising a flexible recording disk (12) having an aperture (16) defined centrally therein, and an index hole (18) defined eccentrically therein, and a jacket (14) enclosing the recording disk (12) and having a data protect cutout (28) formed therein, the storage file (30) comprising:

(a) a rotary drive hub (42) having a central depression (44).

(b) a rotatable, flanged centering cone (48) movable into and out of engagement in the depression (44) in the drive hub (42) through the aperture (16) in the recording disk (12), whereby the recording disk (12) can be caught between the drive hub (42) and the centering cone (48);

(c) drive means (40,74) including a disk drive motor (40) coupled to the drive hub (42) for imparting rotation thereto, the centering cone (48) when engaged with the drive hub (42) being rotable therewith to cause rotation of the recording disk (12) caught therebetween;

(d) a first disk sensor (60) for detecting the insertion of the disk cartridge (10) in the storage file (30) and for sensing the data protect cutout (28) in the jacket (14);

(e) a second disk sensor (62) for detecting the speed of rotation of the recording disk (12) enganged between the drive hub (42) and the centering cone (48) by sensing the index hole (18) in the recording disk (12);

(f) a "ready" circuit connected to the second disk sensor (62) for detecting the fact that the speed of rotation of the recording disk (12) has built up to a predetermined degree; characterized by:

(g) a source (78) of an internal motor control signal (D) responsive to an output (B) from the first disk sensor (60) for causing the drive means (40, 74) to set the drive hub (42) into rotation upon insertion of the disk cartridge (10) in the storage file (30), and further responsive to an output (F) from the "ready" circuit (80) for causing the drive means (40, 74) to set the drive hub (42) out of rotation when the speed of rotation of the recording disk (12) builds up to the predetermined degree;

(h) a gate circuit (66) having a first input connected to receive an external motor control signal (A) for the on/off control of the disk drive motor (40), a second input connected to the source (78) for receiving the internal motor control signal (D), and an output connected to the drive means (40, 74), whereby the drive hub (42) is rotated at least while the centering cone (48) is being moved into engagement in the central depression (44) in the drive hub (42) through the central aperture (16) in the recording disk (12), besides being rotated for data transfer between the storage file (30) and the recording disk (12); and (i) a stop circuit (82) responsive to an output (E) from the second disk sensor (62) for causing the drive means (40, 74) to terminate the rotation of the drive hub (42) upon lase of a predetermined period of time following the withdrawal of the disk cartridge (10) from the storage file (30), the second disk sensor (62) being capable of sensing the withdrawal of the disk cartridge (10) from the storage file (30).

**Patentanspruch**

1. Platteneinheit (30) zum Datenübertragen mit Hilfe einer Diskette (10), die eine biegsame Aufzeichnungsplatte (12) mit einer Zentralbohrung (16) und einem exzentrisch angeordneten Indexloch (18) sowie eine Hülle (14) umfaßt, welche die Aufzeichnungsplatte (12) enthält und einen Datensicherungsausschnitt (28) aufweist, wobei die Platteneinheit (30) umfaßt.

a) eine Drehantriebsnocke (42) mit einer Zentralvertiefung (44);

b) einen drehbaren, mit einem Flansch versehenen Zentrierkonus (48), der durch die Bohrung (16) in der Aufzeichnungsplatte (12) in und außer Eingriff mit der Vertiefung (44) in der Antriebsnocke (42) bewegbar ist, wobei die Aufzeichnungsplatte (12) zwischen der Antriebsnocke (42) und dem Zentrierkonus (48) festsetzbar ist;

c) eine Antriebseinrichtung (40, 74) mit einem plattenantriebsmotor (40), der zum Drehantreiben der Antriebsnocke (42) an diese gekoppelt ist, wobei der in die Antriebsnocke (42) eingreifende Zentrierkonus (48) mit letzterer drehbar ist, um den Drehantrieb der dazwischen festsitzenden Aufzeichnungsplatte (12) zu bewerkstelligen;

d) einen ersten Plattenfühler (60) zum Erfassen des Einsetzens der Diskette (10) in die Platteneinheit (30) und zum Abtasten des Datensicherungsausschnitts (28) in der Hülle (14);

e) einen zweiten Plattenfühler (62) zum Erfassen der Drehgeschwindigkeit der zwischen der Antriebsnocke (42) und dem Zentrierkonus (48) festliegenden Aufzeichnungsplatte (12) durch Abtasten des Indexlochs (18) in der Aufzeichnungsplatte (12);

f) einen "Betriebsbereitschaftsanzeige"-Schaltkreis, der an den zweiten Plattenfühler (62) zum Erfassen des Fakts angeschlossen ist, daß die Drehgeschwindigkeit der Aufzeichnungsplatte (12) eine vorbestimmte Stufe erreicht hat; gekennzeichnet durch:

g) eine Quelle (78) eines internen Motorregelsignals (D), die auf ein Ausgangssignal (B) des ersten Plattenfühlers (60) anspricht, um die Antriebseinrichtung (40, 74) zum Drehantreiben der Antriebsnocke (42) in Erwiderung auf das Einsetzen der Diskette (10) in die Platteneinheit (30) zu veranlassen, und die zusätzlich auf ein Ausgangssignal (F) des "Betriebsbereitsschaftsanzeige"-Schaltkreises (80) anspricht, um die Antriebseinrichtung (40, 74) zum Beenden des Drehantreibens der Antriebsnocke (42) zu veranlassen, sobald die Drehgeschwindigkeit der Aufzeichnungsplatte (12) die vorbestimmte Stufe erreicht hat.

h) einen Torschaltkreis (66) mit einem ersten Eingang mit einem Anschluß zum Empfangen eines externen Motorregelsignals (A) für die An/Aus-Steuerung des Plattenantriebsmotors (40), mit einem zweiten Eingang, der an die Quelle (78) zum Empfangen des internen Motorregelsignals (D) angeschlossen ist, und mit einem Ausgang, der an die Plattenantriebseinrichtung (40, 74) angeschlossen ist, wobei die Antriebsnocke (42) neben dem Drehantrieb für die Datenübertragung zwischen der Platteneinheit (30) und der Aufzeichnungsplatte (12) zumindest während des Ineingriffbringens des Zentrierkonus (48) mit der Zentralvertiefung (44) in der Antriebsnocke (42) durch die Zentralbohrung (16) in der Aufzeichnungsplatte (12) drehangetrieben ist; und

i) einem Anhalteschaltkreis (42), der auf ein Ausgangssignal (E) von dem zweiten Plattenfühler (62) anspricht, um die Antriebseinrichtung (40, 74) zum Beenden der Drehung der Antriebsnocke (42) in Erwiderung auf den Ablauf einer vorbestimmten Zeitperiode zu veranlassen, die dem Herausnehmen der Diskette (10) aus der Platteneinheit (30) folgt, wobei der zweite Plattenfühler (62) dazu ausgelegt ist, die Herausnahme der Diskette (10) aus der Platteneinheit (30) zu erfassen.

## Revendication

1. Unité de mémoire à disques (30) pour transfert de données avec un chargeur de disque (10) comprenant un disque souple d'enregistrement (12), qui comporte une ouverture (16) définie en son centre et un trou de repérage ou d'index (18) défini de façon excentrée dans le disque, et une enveloppe ou pochette (14) entourant le disque d'enregistrement (12) et dans laquelle est ménagée une encoche (28) de protection des données, l'unité de disques (30) comprenant:

(a) un moyeu d'entraînement rotatif (42) qui présente une dépression centrale (44);

(b) un cône de centrage rotatif à collerette (48) déplaçable en contact et hors de contact dans la dépression (44) du moyeu d'entraînement (42), à travers l'ouverture (16) du disque d'enregistrement (12), de sorte que le disque d'enregistrement (12) peut être saisi entre le moyeu d'entraînement (42) et le cône de centrage (48);

(c) des moyens d'entraînement (40,74) comprenant un moteur (40) d'entraînement de disque, accouplé au moyeu d'entraînement (42) pour communiquer une rotation à ce dernier, le cône de centrage (48), lorsqu'il est en prise avec le moyeu d'entraînement (42), pouvant tourner avec celui-ci de manière à engendrer une rotation du disque d'enregistrement (12) tenu entre eux;

(d) un premier détecteur de disque (60) pour détecter l'insertion du chargeur de disque (10) dans l'unité de disques (30) et pour détecter l'encoche de protection des données (28) dans l'enveloppe (14);

(e) un deuxième détecteur de disque (62) pour détecter la vitesse de rotation du disque d'enregistrement (12) saisi entre le moyeu d'entraînement (42) et le cône de centrage (48), par détection du trou d'index (18) du disque d'enregistrement (12);

(f) un circuit "prêt" connecté au deuxième détecteur de disque (62) pour détecter le fait que la vitesse de rotation du disque d'enregistrement (12) a atteint une valeur prédéterminée; caractérisée par:

(g) une source (78) d'un signal interne (D) de commande de moteur qui répond à une sortie (B) du premier détecteur de disque (60) de manière à agir sur les moyens d'entraînement (40, 74) pour mettre le moyeu d'entraînement (42) en rotation lors de l'insertion du chargeur de disque (10) dans l'unité de disques (30), et qui répond en outre à une sortie (F) du circuit "prêt" (80) de manière à agir sur les moyens d'entraînement (40, 74) pour mettre hors rotation le moyeu d'entraînement (42) lorsque la vitesse de rotation du disque d'enregistrement (12) atteint la valeur prédéterminée;

(h) un circuit de porte (66) comportant une première entrée connectée de manière à recevoir un signal externe (A) de commande de moteur pour la commande marche/arrêt du moteur d'entraînement de disque (40), une deuxième entrée connectée à la source (78) de manière à recevoir le signal interne (D) de commande de moteur, et une sortie connectée aux moyens d'entraînement (40, 74), de sorte que le moyeu d'entraînement (42) tourne au moins pendant que le cône de centrage (48) est amené en prise dans la dépression centrale (44) du moyeu d'entraînement (42) à travers l'ouverture centrale (16) du disque d'enregistrement (12), en plus d'être mis en rotation pour le transfert de données entre l'unité de mémoire à disques (30) et le disque d'enregistrement (12); et

(i) un circuit d'arrêt (82) qui répond à une sortie (E) du deuxième détecteur de disque (62) de manière à agir sur les moyens d'entraînement (40, 74) pour terminer la rotation du moyeu d'entraînement (42) à la fin d'un laps de temps prédéterminé après l'extraction du chargeur de disque (10) de l'unité de disques (30), le deuxième détecteur de disque (62) étant capable de détecter l'extraction du chargeur de disque (10) de l'unité de disques (30).

FIG.1

FIG.4

# FIG.2

# FIG.3

EP 0 123 848 B1

# FIG.5

A EXTERNAL MOTOR CONTROL SIGNAL — HIGH / LOW

B FIRST DISK SENSOR OUTPUT

C EDGE SENSOR OUTPUT

D FLIP-FLOP $\bar{Q}$ OUTPUT

E SECOND DISK SENSOR OUTPUT

F READY SIGNAL

G STOP SIGNAL

H MOTOR DRIVE SIGNAL

I CENTERING CONE POSITION — UP / DOWN / UP — 10 sec

$M_1$  $M_2$  $M_3$  $M_4$  $M_5$  $M_6$  $M_7$  $M_8$  $M_9$  $M_{10}$  $M_{11}$

EP 0 123 848 B1

# FIG.6

A EXTERNAL MOTOR CONTROL SIGNAL

B FIRST DISK SENSOR OUTPUT

C EDGE SENSOR OUTPUT

D FLIP-FLOP $\bar{Q}$ OUTPUT

E SECOND DISK SENSOR OUTPUT

F READY SIGNAL

G STOP SIGNAL

H MOTOR DRIVE SIGNAL

I CENTERING CONE POSITION

LOW

10sec

UP

DOWN

UP

$M_1$  $M_2$  $M_3$$M_4$  $M_5$  $M_6$  $M_7$  $M_8$  $M_9$  $M_{10}$  $M_{11}$

EP 0 123 848 B1

# FIG.7

FROM NAND
GATE 66

82

S    Q    86
              G
R    Q̄
         TO AND
         GATE 72

FROM SECOND
DISK SENSOR 62

88    90

INTEGRATOR

84